# EUROPEAN PATENT APPLICATION

(11) **EP 4 270 310 A1**
(43) Date of publication of application: **01.11.2023**
(21) Application number: 22305614.4
(22) Date of filing: 26.04.2022
(51) Int. Cl.: G06T 7/00, G06T 7/62

(54) **LASER SCANNING ON CABLE AND ASSEMBLY DEFECTS**

(71) Applicant: Nexans, 92400 Courbevoie (FR)
(72) Inventor: DOEDENS, Espen, 1788 HALDEN (NO); FRISK, Nils-Bertil, 45297 STROMSTAD (SE)
(74) Representative: Ipsilon

(57) **Abstract**

A method and system for inspecting damages to high voltage and/or medium voltage cables or cable components. The method and system captures and stores a set of 3-dimensional (3D) surface geometry measurement data of the area of interest of a surface of the cable or cable component by moving a 3D surface scanner about the cable over the area of interest, the captured 3D surface from step a) is inspected to evaluate if any damages are present, and if the inspection reveals a damage, a section of the cable body is removed. Steps a) to c) can be repeated until no damage is revealed and a 3D map of the damage can be provided.

## Description

### Technical field

The present invention relates to high voltage and medium voltage cables, in particular to a system and method for inspecting damages to high voltage and/or medium voltage cables or cable assemblies.

### Background

A high voltage (HV) and medium voltage (MV) cable is used for electric power transmission at medium and high voltage, e.g. above 1 000 V. Such cables include a conductor and an insulation. The insulation may consist of polymers or polyethylene, including ethylene propylene rubber (EPR) and cross-linked polyethylene (XLPE). At inner and outer sides of the insulation semiconducting layers are fused to the insulation. The semiconducting layers prevent air-filled cavities between the metal conductors and the dielectric so that small electric discharges cannot arise and endanger the insulation material. The insulation is usually also covered by a copper or aluminum wire screen, or a lead or aluminium or copper jacket, or combinations thereof. This metallic screen or jacket is followed by a polymeric (e.g. PE or PVC) outer sheath.

The cables are manufactured in cable manufacturing lines using extrusion. The quality control and meeting product specifications are very important in cable production. A failure due to dielectric breakdown in the HV-cable may cause a break to power supply. For instance, high voltage cables are used for long length connections for power distribution and power transmission. The manufacturing quality is monitored during the operation of the cable manufacturing line to assure the quality of the final product. The final product is usually a assembly comprising cable lengths connected together as well as connected accessories such as terminations joints, GIS terminations, asymmetric joints, MV joints, MV terminations, MV plugin terminations, etc.

Physical damages can occur to HV cables, or MV cables, or MV/HV cable products, where the long term performance of the product can be seriously jeopardized. When such damages occur, during production, transportation, installation, or service of these products, it is necessary to evaluate the extend of the damage. One means of assessing the damage is do measure the degree of geometrical deviation in the defect region, and in other cases to remove layers or parts bit by bit until the remainder of the cable or assembly can be confirmed to be undamaged. Another example is to cut away polymeric or other materials until no further damage is observed on the object.

The main problem in such operations is the lack of a good three-dimensional (3D) assessment of the damage before starting the dissection/disassembly, during this process, as well as an assessment of the dimensions of the healthy parts remaining of the assembly. Also, upon repairing the assemblies/cables with new parts and/or substituting new layers in place, there is no good three-dimensional assessment of whether the repaired product meets the acceptance criteria defining a healthy product.

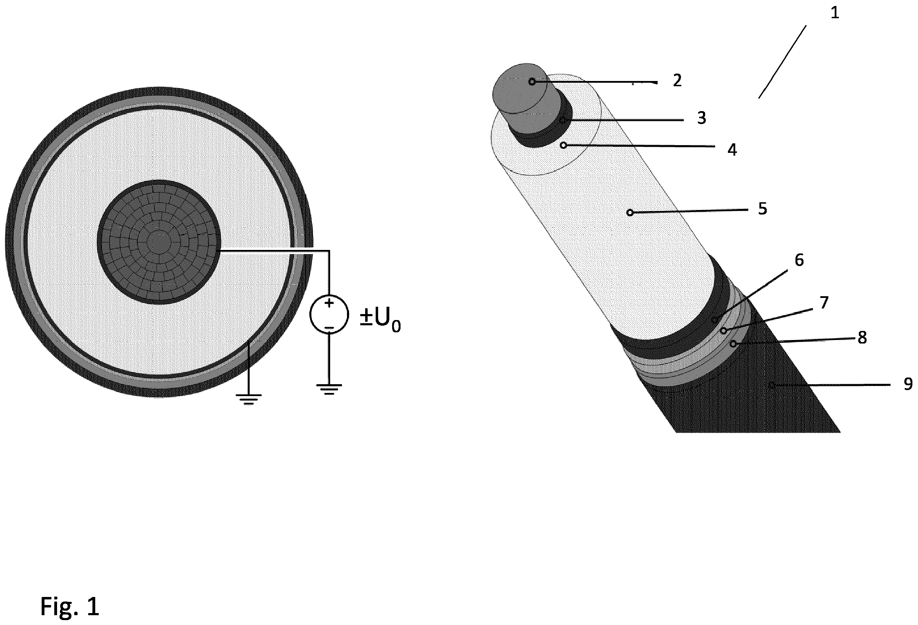

Fig. 1 show an exemplary HV-cable 1. In the figure the outer sheath 9, the lead sheath 8, swelling tapes 7 and the outer semiconducting screen 6 have been removed at the end of the cable, uncovering the conductor 2, the inner semiconducting screen 3 and the insulation 4 having a surface 5.

Today assessment of the external damages, the internally damaged parts, and the remaining healthy components within is carried out by means of manual measurement tools, photographic evidence, and other methods that rely on manual use of digital tools.

EP3901571 discloses a system and a method for determining a quality of a surface of a high voltage cable end using a 3D scanner. The method comprises moving a non-contact surface scanner about the cable end, measuring distance to the surface over the area of the surface by sequentially measuring a plurality of sub-areas of the area of the surface, creating a continuous 3D surface geometry measurement of the surface of the cable end and comparing, using the continuous 3D surface geometry measurement with at least one surface geometry acceptance threshold determining the quality of the surface of the high voltage cable end.

The object of the invention is to provide a system and a method for assessment of damages of HV and/or MV cables that solves or at least mitigate the problems of prior art.

The object of the invention is achieved by means of the patent claims.

In the exemplary embodiments, various features and details are shown in combination. The fact that several features are described with reference to a particular example should not be construed as implying that those features be necessity have to be included together in all the embodiments of the invention.

Conversely, features that are described with reference to different embodiments should not be construed as mutually exclusive. As those skilled in the art will readily understand, embodiments that incorporate any subset of features described herein and that are not expressly interdependent have been contemplated by the inventor and are part of the intended disclosure. However, explicit descriptions of all such embodiments would not contribute to the understanding of the principles of the invention, and consequently some permutations have been omitted for the sake of simplicity.

The invention provides an inspection method that can generate a go/no go criteria on the performed repair on-site. This provides the capability of tracking the geometries in 3D of each damage and subsequent repair of the product. The data can be stored and accessed during the full lifetime of the cable system. The generated data is feasible for use in future physics based digital twin models.

The 3D data can also be easily transferred to an external expert which can evaluate the extend of the damage and the quality of repair, and provide the go/no go criteria remotely. These measurement results will also add value to the cable systems in that the data can be stored and provided to for future reference and health checks of the cable system.

In one embodiment, a method for inspecting damages to high voltage and/or medium voltage cables or cable components, comprises:
a) capture and store a set of 3-dimensional (3D) surface geometry measurement data of an area of interest of a surface of the cable or cable component by moving a 3D surface scanner about the cable over the area of interest,
b) inspect the captured 3D surface from step a) to evaluate if any damages are present,
c) if the inspection reveals a damage, remove a section of the cable body,
d) repeat steps a) to c) until no damage is revealed.

The 3D surface geometry measurement data can be represented by a data point cloud, where the data points in the data point cloud can be further processed to provide a representation of the cable. A data point cloud is a set of data points in space. The points may represent a 3D shape or object. Each point position has its set of Cartesian coordinates (X, Y, Z). Point clouds are generally produced by 3D scanners or by photogrammetry software, which measure many points on the external surfaces of objects around them. As the output of 3D scanning processes, point clouds are used for many purposes, including to create 3D CAD models for manufactured parts, for metrology and quality inspection, and for a multitude of visualization, animation, rendering and mass customization applications.

While point clouds can be directly rendered and inspected, point clouds are often converted to polygon mesh or triangle mesh models, NURBS surface models, or CAD models through a process commonly referred to as surface reconstruction.

There are many techniques for converting a point cloud to a 3D surface. Some approaches, like Delaunay triangulation, alpha shapes, and ball pivoting, build a network of triangles over the existing vertices of the point cloud, while other approaches convert the point cloud into a volumetric distance field and reconstruct the implicit surface so defined through a marching cubes algorithm.

In one embodiment is the sets of 3D surface geometry measurements from each repeated step merged to obtain a full 3D map of the damaged section of the cable.

In order to get a full 3D map, there may be attached at least one marker device on the cable near the area of interest. The marker device may then be identified in the 3D data and used to align the sets of surface geometry measurement data during merging.

The inspection may comprise measuring the insulation thickness of the cable or cable component.

The method may further comprise steps of repairing the cable after a damage has been identified. Such repair may comprise at least some of the following steps:
- repairing the damaged part of the cable,
- capture a 3D measurement of the repaired cable and store the 3D data in a storage device.
- acquiring a basis set of 3-dimensional (3D) surface geometry measurement data during production of the cable or cable component,
- comparing the 3D measurement of the repaired cable with the basis 3D measurement.

In one embodiment, a system for inspecting damages to high voltage and/or medium voltage cables, the system comprises:
- a non-contact surface scanner, for capturing a continuous 3D surface geometry measurement of a section of interest of the cable by moving a non-contact surface scanner about the cable over an area of interest of the surface,
- a memory unit for storing multiple continuous 3D surface geometry measurement of the area of interest of the surface,
- a processor connected to the non-contact surface scanner, configured to inspect the captured 3D surface geometry for damages and merge several captured 3D surface geometry measurements to obtain a full 3D map of the section of the cable.

### Brief description of the drawings

The invention will now be described in more detail by means of examples and with reference to the figures.
Fig. 1 illustrates a high volt cable end.
Fig. 2 illustrates an example of a 3D surface geometry measurement of a surface of a cable.
Fig. 3 shows a flow chart of an exemplary method according to the invention.
Fig. 4 shows an example of a HV/MV cable system where accessories are combined with the cable.
Fig. 5 shows a flow chart of an exemplary method for repairing a damaged cable or cable accessory.

Figure 1 illustrates a detailed view of the high voltage cable end. As shown an exemplary high voltage cable end 1. The outer sheath 9, the lead sheath 8, swelling tapes 7 and the outer semiconducting screen 6 have been removed, leaving the conductor 2, the inner semiconducting screen 3 and the insulation 4. The surface 5 of the insulation 4 is inspected to ensure that there are no irregularities, before a high voltage cable accessory component, such as high voltage joint, termination for the cable, a rubber joint, is slipped over it.

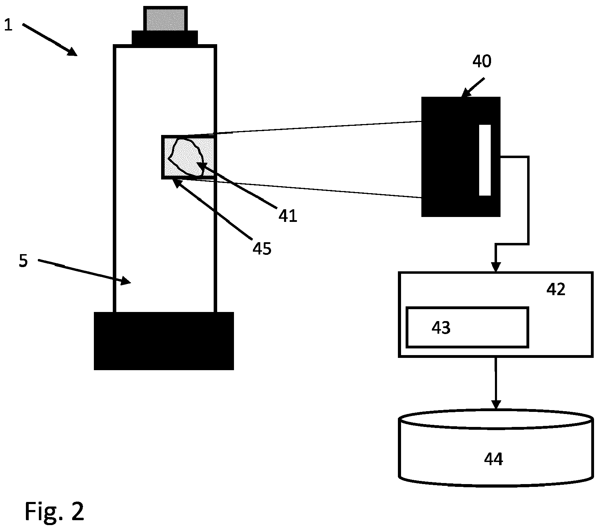

Fig. 2 is a schematic illustration of a system according to the present invention for scanning the surface 5 of a high voltage cable 1. The sizes of various object of the illustration are not in scale. The system comprises a non-contact surface scanner 40. The non-contact surface scanner 40 is directable to an area of interest 45 which comprises a damaged section 41. In one embodiment, the non-contact surface scanner 40 may be a 3D laser scanner. The non-contact surface scanner 40 is arranged to measure the distance to the surface 5 of the area of interest. In the example in the figure, the field-of-view of the non-contact surface scanner corresponds to the area of interest, but the area of interest 45 on the surface 5 may be larger or smaller by the field-of-view or scanning area of the non-contact surface scanner 40. The field-of-view may be round, rectangular, linear or any other shape as determined by the non-contact surface scanner. The non-contact surface scanner 40 is movable around the cable 1 such that the surface 5 of the cable 1 is covered by a plurality of sub-areas in order to ensure that the entire area of interest is scanned. The size of plurality of sub-areas may vary, for example by varying the distance between the non-contact surface scanner 10 and the cable 1. In one embodiment the non-contact surface scanner 10 is freely movable in any direction around the cable 1, such as a handheld 3D laser scanner. The non-contact surface scanner 40 knows its position and direction in 3D space, for example by recognizing a plurality of markers (not shown) positioned on the surface 5. The markers may be stickers or sterile clamps with specific patterns or markers thereon. The markers will result in "NaN" (not a number = empty) areas underneath them, however, the scan can be paused, markers/clamps relocated and then the measurement can also scan the area under the markers. In another embodiment the non-contact surface scanner 40 may be mounted to a jig, e.g. mountable to the HV-cable, such that the non-contact surface scanner 40 may be moved up/down and around the surface 5 to completely fill the area of interest 5 with sub-areas. In this way, using markers may be avoided.

The illustrated system also comprises an analysis part 42. The analysis part 42 is in communication with the non-contact surface scanner 40 over a wired or wireless communication link. In one embodiment, at least parts of the analysis part 42 may be comprised in the non-contact surface scanner 40. The analysis part 42 comprises a processor 43 adapted to process measurement data from the non-contact surface scanner 40 for each of the plurality of sub-areas to create a continuous 3D surface geometry measurement of the area of interest 45, and thus the damage 41. The continuous 3D surface geometry measurement is processed to evaluate if there is a damage in the area of interest, and can also create an image of the damage when a damage is present in the scanned surface.

In one embodiment, the analysis part can provide a go/no go evaluation. In this way an operator may receive a go or a no go after the scan is performed, allowing or disallowing the operator to proceed with the cable. The criterium for providing go/no go may be based on at least one of a height variation threshold, a surface derivative threshold, a peeling wave threshold and/or at least one of an area of a cut, a depth of a cut, and a slope of a cut.

In one embodiment, the analysis part 42 is adapted to transmit the continuous 3D surface geometry measurement to a storage device 44 as a 3D topographic map of the area of interest 45. The analysis part 42 is in communication with the storage device 44 over a wired or wireless communication link. The storage device 44 may be on on-premise server or cloud server. The 3D topographic map of the surface 5 of the cable 1 on the server 44 may be accessible to users and clients for future reference of the cable system.

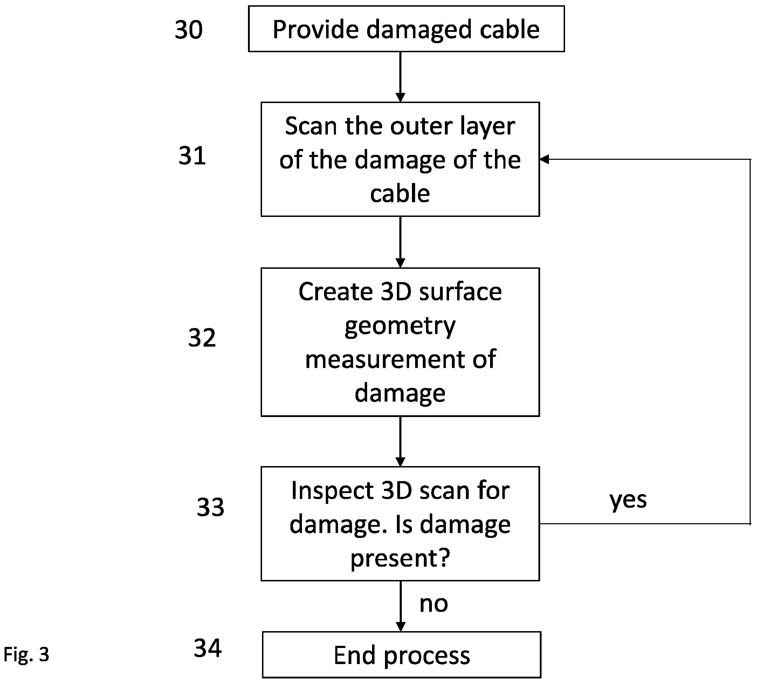

Figure 3 shows a flow chart of an exemplary method according to the invention. In step 30, a damage of a cable or cable accessory is identified, or a damage is suspected, and the cable/accessory is provided for inspection. In step 31, the outer layer of the damaged area is scanned by moving a 3D surface scanner about the cable over the area of interest, and a set of 3-dimensional (3D) surface geometry measurement data of the area of interest is captured and stored in step 32.

In step 33 the captured 3D surface from step 32 is inspected to evaluate if any damages are present.

If the inspection reveals a damage, the operator can remove a section of the cable body, and repeat steps 31-33. This cycle can be repeated until no damage is revealed during the inspection step 33, ie. when an undamaged part of the cable is revealed.

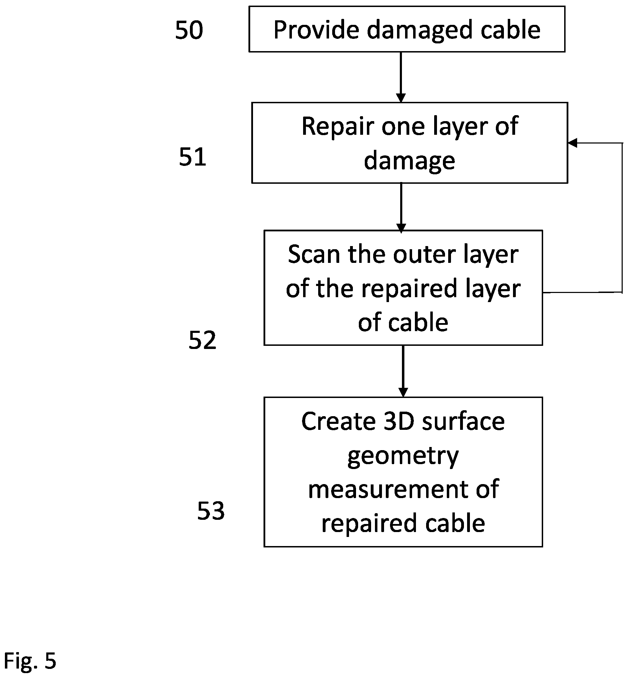

After this procedure, the cable/accessory can be repaired by adding layers until the cable or accessory is complete and undamaged. An example of this process is described in figure 5 below. The 3D surface scanner may be employed during the repairing process, for example by scanning each layer as they are added, thus providing proof of the repair process which can be used for later verification.

If all scans reveal a damage, the cable part may be deemed rejected and the cable may need to be repaired by cutting out the damaged part and splicing the remaining cable or making a joint for inserting a cable part.

The scans may be stored for later proof of repair and as evidence that a full repair with cutting and joining was necessary.

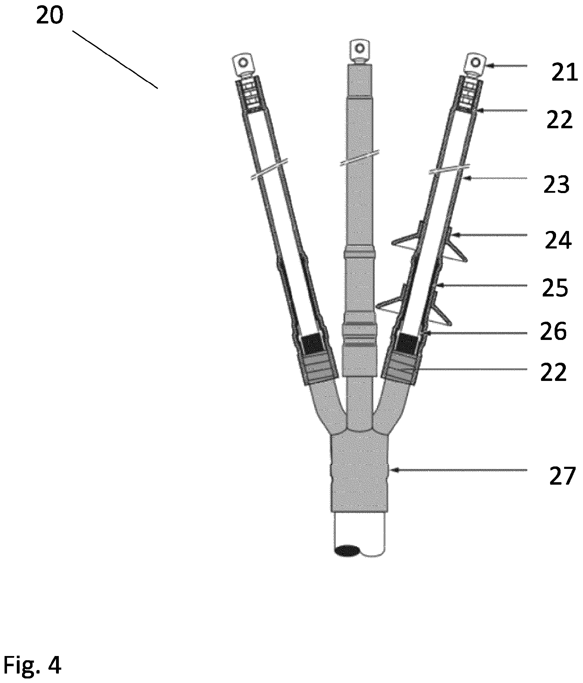

Figure 4 shows an example of a HV/MV cable accessory 20. This example is a heat-shrinkable termination for three core polymeric cables, which are widely used by power utilities and in industrial applications. The accessory comprises cable lugs 21, water sealing mastic 22, anti-tracking heat-shrinkable tube 23, sheds 24, stress control heat-shrinkable tube 25, stress control mastic 26 connected to a break-out 27. The rain sheds 24 are optional accessories and are used for extending the creepage path for cable termination without increasing the length of the cable. They are also used to avoid continuity during rainy season to avoid short circuiting of the electrical network. Several parts of such termination can be vulnerable for damages and can be assessed and repaired by using the described process and equipment. It should be noted that this is only one example, and that the method and system can be used on any kind of cable and/or cable accessory.

Figure 5 shows a flow chart of an exemplary method for repairing a damaged cable or cable accessory. In step 50, the damaged a cable or cable accessory is provided for repair. The cable has for example been inspected and the damage has been imaged in the process illustrated in figure 3, thus providing knowledge of the extent of the damage, such as how many layers are damaged, how big area is damaged, etc.

Based on the provided knowledge, one layer of the cable/cable accessory is repaired in step 51.

In step 52, the outer layer of the repaired area is scanned by moving a 3D surface scanner about the cable over the area of interest, and a set of 3-dimensional (3D) surface geometry measurement data of the area of interest is captured and stored.

In some embodiments, there may also be added a step of inspecting the scan of the repaired layer before proceeding with the next layer. This can be performed manually or automatically and can provide feedback to the operator on the quality of each repaired layer. This will improve the quality of the repair.

The repair and scanning process in steps 51 and 52 are repeated until all damaged layers have been repaired. The scans made during this process can be used to create a 3D surface geometry of the repaired cable in step 53. The 3D geometry of the cable can be stored for later use.

## Claims

1. A method for inspecting damages to high voltage and/or medium voltage cables or cable components, comprising:
a) capture and store a set of 3-dimensional (3D) surface geometry measurement data of an area of interest of a surface of the cable or cable component by moving a 3D surface scanner about the cable over the area of interest,
b) inspect the captured 3D surface from step a) to evaluate if any damages are present,
c) if the inspection reveals a damage, remove a section of the cable body,
d) repeat steps a) to c) until no damage is revealed.

2. A method according to claim 1, where the 3D surface geometry measurement data are represented by a data point cloud, where the data points in the data point cloud can be further processed to provide a representation of the cable.

3. A method according to claim 1, where the sets of 3D surface geometry measurements from each repeated step are merged to obtain a full 3D map of the damaged section of the cable.

4. A method according to claim 3, further comprising attaching at least one marker device on the cable near the area of interest, identifying the marker device in the 3D data and using the identified marker device to align the sets of surface geometry measurement data during merging.

5. A method according to claim 1, where the inspection comprises measuring the insulation thickness of the cable or cable component.

6. A method according to claim 1, comprising the further steps of:
e) repairing the damaged part of the cable,
f) capture a 3D measurement of the repaired cable and store the 3D data in a storage device.

7. A method according to claim 6, comprising
- acquiring a basis set of 3-dimensional (3D) surface geometry measurement data during production of the cable or cable component,
- comparing the 3D measurement of the repaired cable with the basis 3D measurement.

8. A system for inspecting damages to high voltage and/or medium voltage cables, the system comprising:
- a non-contact surface scanner, for capturing a continuous 3D surface geometry measurement of a section of interest of the cable by moving a non-contact surface scanner about the cable over an area of interest of the surface,
- a memory unit for storing multiple continuous 3D surface geometry measurement of the area of interest of the surface,
- a processor connected to the non-contact surface scanner, configured to inspect the captured 3D surface geometry for damages and merge several captured 3D surface geometry measurements to obtain a full 3D map of the section of the cable.

9. A system according to claim 8, further comprising at least one marker device located on the cable near the area of interest, where the marker device can be identified in the 3D geometry measurements and used to align the captured 3D surface geometry measurements during merging.

10. A system according to claim 8 or 9, where the inspection comprises measuring the insulation thickness of the cable or a component of the cable.
